# EUROPEAN PATENT APPLICATION

(11) **EP 0 943 750 A2**
(43) Date of publication of application: **22.09.1999**
(21) Application number: 99105472.7
(22) Date of filing: 17.03.1999
(51) Int. Cl.: E04F 13/08, E04F 13/14, E04F 15/02, F16B 5/00

(54) **Method of laying tile units**

(30) Priority: 18.03.1998 JP 6843098
(71) Applicant: Kabushiki Kaisha Daietsu, Koka-gun, Shiga (JP)
(72) Inventor: Osawa, Yoshinori c/o K. K. Daietsu, Koka-gun, Shiga (JP)
(74) Representative: Glawe, Delfs, Moll & Partner

(57) **Abstract**

A tile-setting method that permits easy and secure setting of tiles (P) on a base or wall. Tiles (P) are laid on a base in a plurality of rows. Each tile (P) is formed with a groove extending for the entire length thereof. A mounting bar (2) is inserted into the groove of each tile (P) from one end thereof. The groove is of such a shape that the tile (P) will not come off the mounting bar (2). The mounting bar (2) is then screwed to the base. Since the tiles (P) are laid on the base by screwing the mounting bar (2) to the base, workability is good. A plurality of tiles (P) may be mounted on a single mounting bar (2) to further improve workability. A strip of electrical insulating tape may be stuck on the backs of the tiles (P) joined together to hold the tiles (P) in position relative to the mounting bar or bars (2) and to prevent electrical corrosion as well.

## Description

### BACKGROUND OF THE INVENTION

This invention relates to a method of laying tiles on walls and floors of a house and tile units.

An increasingly greater number of today's people prefer tiled inner and outer house walls. Prior art documents concerning tiled wall structures are too numerous to mention all of them. To name only a few of them, unexamined Japanese patent publications 61-282546, 1-21162 and 6-81441 disclose tiled wall structures having mounting plates each provided with a rib having an inverse trapezoidal section and fixed to the surface of a wall base to extend the entire lateral or vertical length thereof. Tiles P are attached to each mounting plate by engaging the rib of each mounting plate in an inwardly widening trapezoidal groove formed in the back of each tile.

More specifically, with adhesive applied to the end face of the rib of each mounting plate, tiles are fitted on the mounting plates by inserting the ribs into the grooves of the tiles so that the adhesive fills the space between the bottom end of the rib and the bottom of the groove. Otherwise, a keeping member is pressed into the space between the rib and the groove like a wedge to mechanically secure the tiles.

In US patent No. 1975769 is disclosed a technique for fixing tiles P in parallel to one another with support members screwed to the joints of the tiles. Unexamined Japanese patent publication 7-217155 discloses a tile unit comprising tiles arranged in rows and coupled together by tape.

In any of these conventional methods, tiles are fitted on and adhesively bonded to the ribs of the mounting plates. Thus, an adhesive is needed to fix tiles to the ribs. To stably fix tiles in position, an adhesive has to be applied uniformly. After tiles have been fitted on ribs, the adhesive stuck on tiles or surrounding areas has to be wiped off.

If keeping members are used, they have to be pushed one by one into the spaces between the respective tiles and the ribs and fixed in position at a construction site. This is extremely troublesome.

In the tile unit arrangement in which tiles are coupled together by tape, many tiles can be mounted at a time. But this arrangement also needs mortar and keeping members, and thus is troublesome.

In the arrangement in which tiles are fixed in position by support means provided at the tile joint, the tile joint width is uniform, so that it is impossible to cope with changes in the width of tile joints.

An object of the present invention is to lessen the tile-setting work at the construction site while eliminating the use of an adhesive.

### SUMMARY OF THE INVENTION

According to this invention, there is provided a method of setting tiles on a base, the method comprising the steps of inserting a mounting bar into a groove formed in the back of each tile from one end thereof, and securing the mounting bar to the base by screws.

Other features and objects of the present invention will become apparent from the following description made with reference to the accompanying drawings, in which:

### BRIEF DESCRIPTION OF THE DRAWINGS

Fig. 1 is a perspective view of a tiled wall structure embodying the invention:
Fig. 2 is perspective view of a tile/mounting bar assembly forming the tiled wall structure of Fig. 1;
Fig. 3 is a perspective view of a different tile/mounting bar assembly forming the tiled wall structure of Fig. 1;
Fig. 4A is a perspective view of a tile unit forming the tiled wall structure of Fig. 1;
Fig. 4B shows one way to set the tile unit of Fig. 4A;.

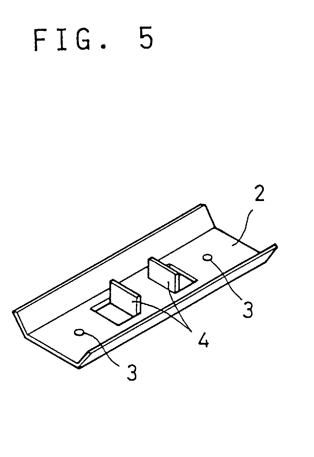

Fig. 5 is a perspective view of a modified mounting bar;
Fig. 6A is a perspective view of a different tile unit forming the tiled wall structure of Fig. 1;
Fig. 6B is its sectional view;
Fig. 6C is shows its operation;
Fig. 7 is a perspective view of a modified tile unit embodying the invention;
Fig. 8 is a perspective view of another modified tile unit embodying the invention;
Fig. 9 is a perspective view of a tiled floor structure embodying the invention; and
Fig. 10 is a view showing how a spacer is fitted in the gap.

### DETAILED DESCRIPTION OF THE PREFERRED EMBODIMENT

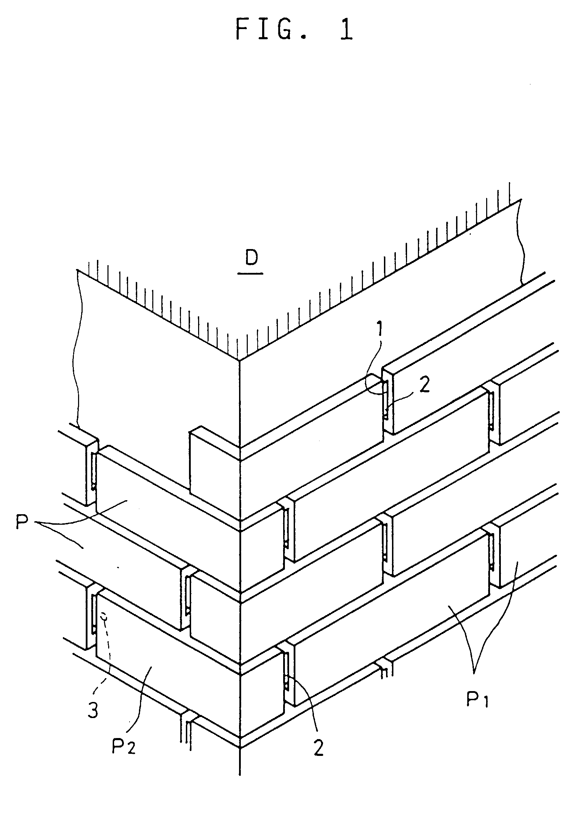

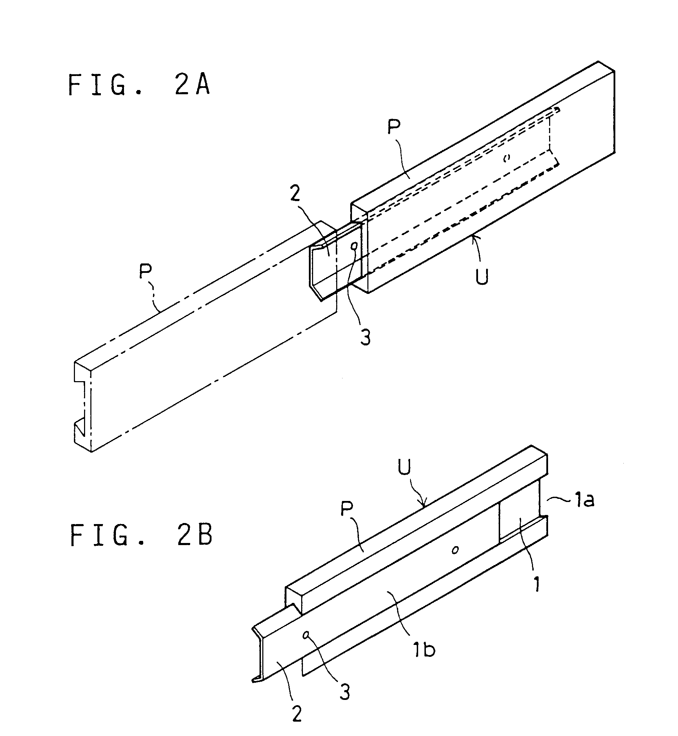

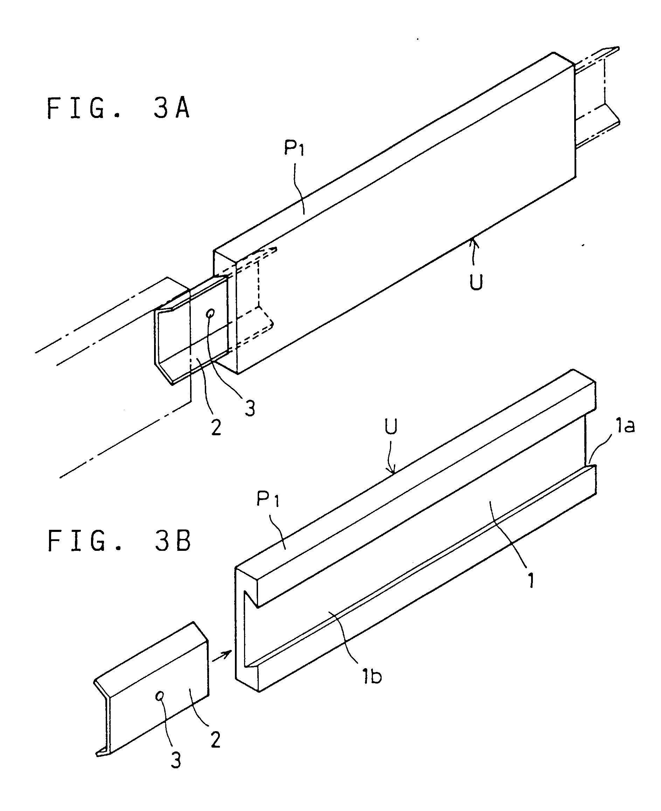

In the embodiment of Fig. 1, in which tiles P (designated by P1, P2..) are mounted with their longitudinal axis aligned with the lateral direction. As shown in Figs. 2 and 3, each tile P has in its back a groove 1 having an inwardly widening trapezoidal section. A mounting bar 2 of metal (such as stainless steel, aluminum or steel) is inserted into the groove of one tile from one end la thereof so as not to come out of its opening 1b to form a tile unit U. The bar 2 may be slightly shorter than tiles P as shown in Fig. 2 or much shorter than tiles as shown in Fig. 3.

With the mounting bar 2 protruding a predetermined length from one end of the groove 1 of the tile, the tile unit U is screwed to a base or wall D by inserting screws through screw holes 3 formed in the mounting bar 2. Then, as shown by chain line in Fig. 2A, another tile P is fitted on the protruding portion of the mounting bar 2 so as to leave a joint of a predetermined width between the tiles.

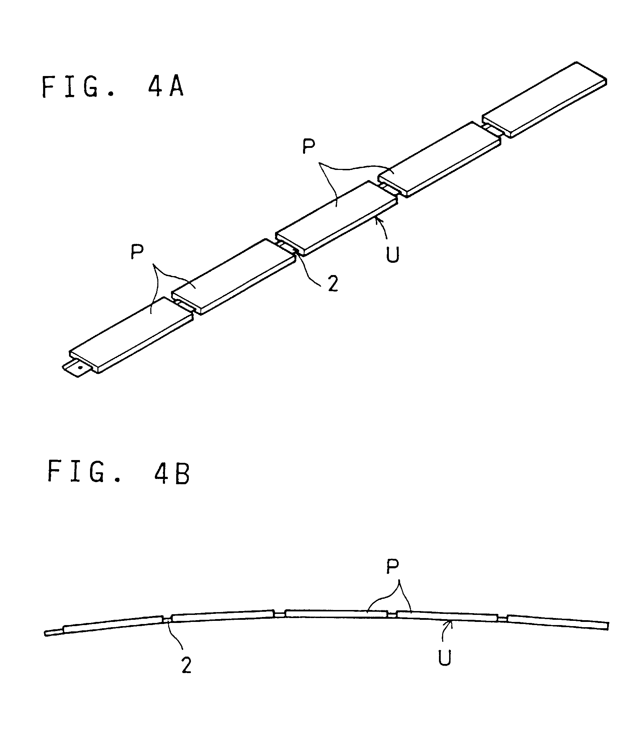

A plurality of tiles are mounted on the base D by repeating the above steps. But instead, a plurality of tiles may be joined together by mounting bars in the above manner to form a tile unit U and then the tile unit be screwed to the base D. In this case, as shown in Fig. 4A, a plurality of tiles may be joined together by a single mounting bar 2 pierced through the tiles. The tiles joined together by such a single long mounting bar can be mounted on a base having an arcuate surface by bending the mounting bar 2 as shown in Fig. 4B. The bar 1 may have positioning tabs 4 for positioning tiles. The tabs 4 may be portions of the bar 2 formed by cutting and erecting. Such tabs can be erected after tiles P have been fitted on the bar e.g. by use of a screwdriver so that the tabs would not hinder the fitting of tiles on the bar. Joint portions are filled with e.g. mortar.

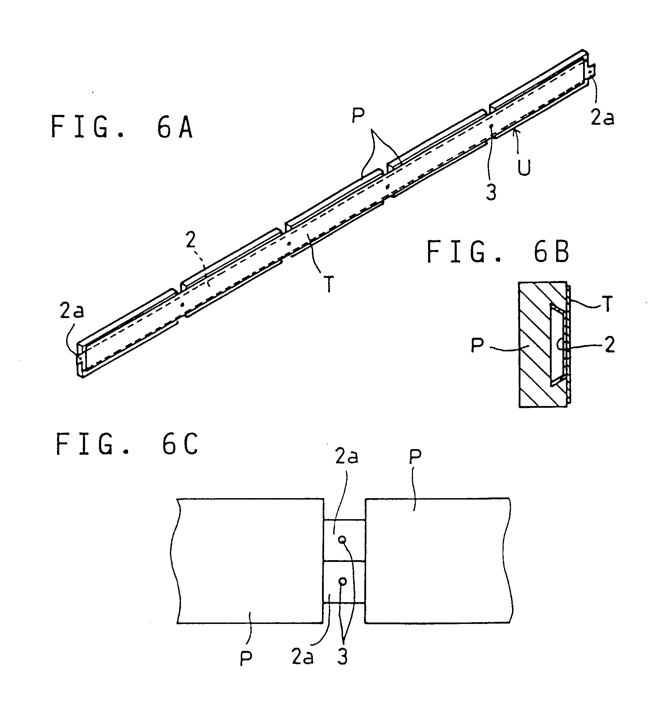

As shown in Figs. 6A and 6B, a strip of electrical insulating tape T such as paper may be adhered to the backs of the tiles P joined together for positioning of the tiles P. The tiles P can thus be easily fixed in position (and thus the joint width between the tiles can be easily adjusted) during mounting of the tiles. Also, since the tiles P do not move relative to the mounting bar 2, the tile unit can be carried easily. The number of tiles P and the number of rows of tiles are not limited. Each mounting bar 2 may have half-width ends 2a displaced to one and the other sides so that the ends 2a of the adjacent (or integral) mounting bars 2 are disposed one on the other as shown in Fig. 6C. This arrangement makes joint width adjustment easier.

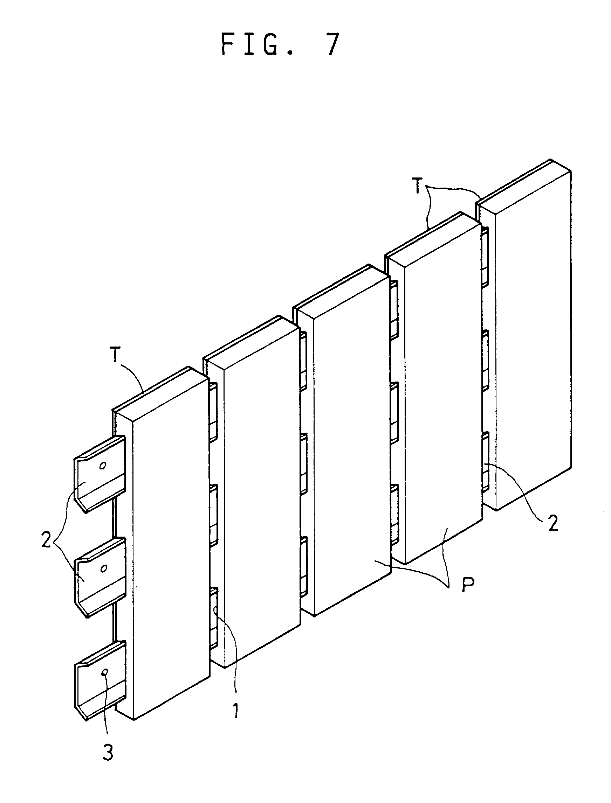

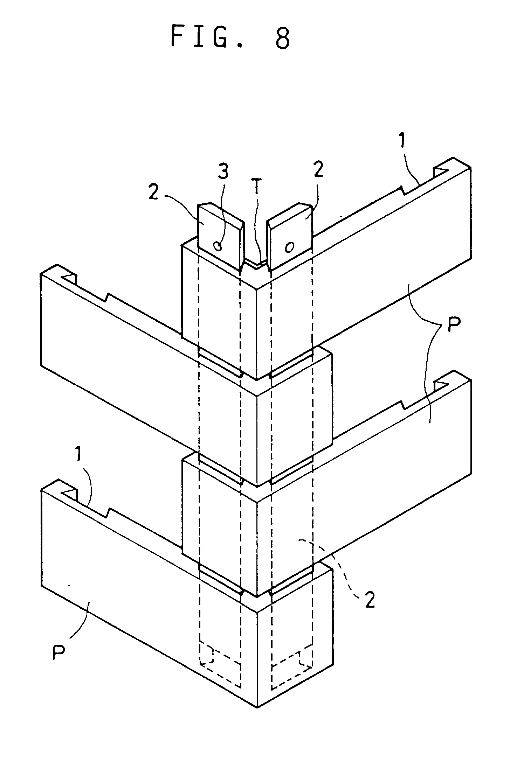

If tiles P having a transverse groove 1 are used, a plurality of such tiles P arranged in a row may be joined together by a plurality of mounting bars 2 as shown in Figs. 7 and 8. A strip of electrical insulating tape may be stuck on the backs of the thus joined tiles.

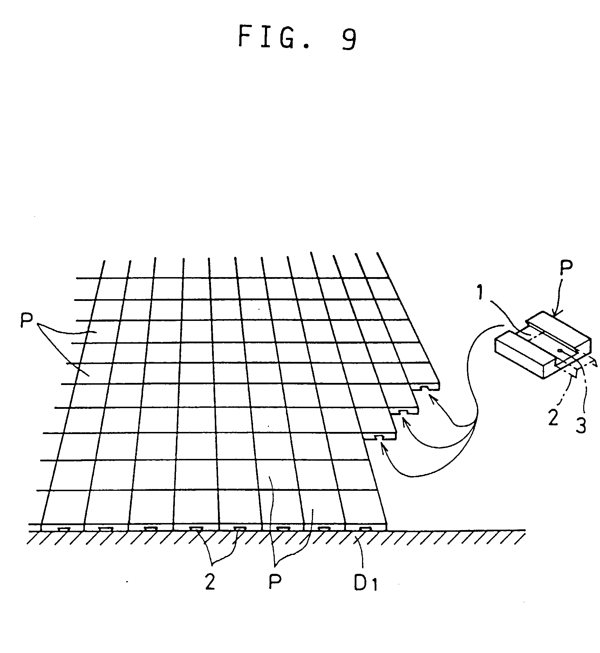

The base D may be a wall as in the embodiment or a floor D1 as shown in Fig. 9.

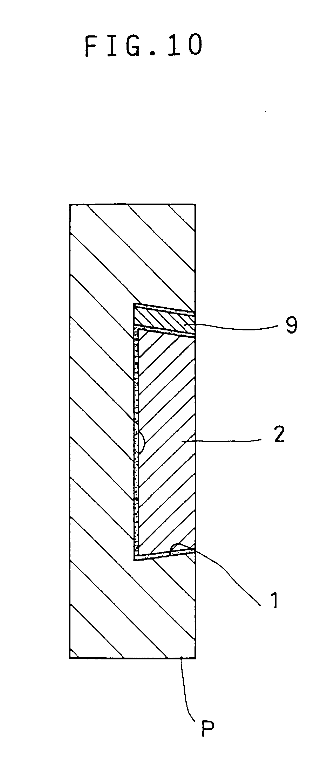

If there is a gap between the rib of a mounting bar and the groove of a tile, such a gap may be filled by fitting a spacer 9 and pouring adhesive therearound as shown in Fig. 10.

It is thus possible to lessen the tile-setting work at the construction site and thus considerably improve workability.

## Claims

1. A method of setting tiles on a base, said method comprising the steps of inserting a mounting bar into a groove formed in the back of each tile from one end thereof, and securing said mounting bar to the base by screws.

2. The method as claimed in claim 1 wherein a plurality of the tiles are connected together by one said mounting bar.

3. The method as claimed in claim 1 or 2 wherein a strip of electrical insulating tape is adhered to the backs of a plurality of tiles joined together by said mounting bars to hold said plurality of tiles in position.

4. The method as claimed in claim 1 wherein said groove is of an inwardly widening trapezoidal section.

5. A tile unit comprising tiles P each formed with a groove in the back thereof, and mounting bars each inserted into said groove of at least one tile from one end thereof, said mounting bars being securable to the surface of a base by screws.

6. The tile unit as claimed in claim 5 wherein each of said mounting bars is inserted into said grooves of a plurality of the tiles.

7. The tile unit as claimed in claim 5 or 6 further comprising a strip of electrical insulating tape adhered to the backs of a plurality of tiles joined together by said mounting bar or bars to hold said tiles in position.

8. The tile unit as claimed in claim 5 wherein said groove is of an inwardly widening trapezoidal section.
